# EUROPEAN PATENT APPLICATION

(11) **EP 4 199 409 A1**
(43) Date of publication of application: **21.06.2023**
(21) Application number: 21863548.0
(22) Date of filing: 25.08.2021
(51) Int. Cl.: H04L 7/00, H04J 3/06

(54) **MESSAGE PROCESSING METHOD AND APPARATUS, DEVICE, SYSTEM, AND STORAGE MEDIUM**

(30) Priority: 04.09.2020 CN 202010924424
(71) Applicant: Huawei Technologies Co., Ltd., Shenzhen, Guangdong 518129 (CN)
(72) Inventor: LYU, Jingfei, Shenzhen, Guangdong 518129 (CN); ZHANG, Xingxin, Shenzhen, Guangdong 518129 (CN)
(74) Representative: Maiwald GmbH
(86) International application number: PCT/CN2021/114588
(87) International publication number: WO 2022/048482

(57) **Abstract**

This application provides a message processing method and apparatus, a device, and a storage medium. For a communication system including at least three network devices, a port status of one of the at least three network devices is a master state, and port statuses of the other network devices are non-master states. A first network device in the communication system receives, through a first port, a first message sent by a second port and used to measure a delay, where the second port is a port of a second network device in the communication system. The first network device stops replying with a second message based on a port status of the first port being a non-master state, to prevent a 1588 function from being disabled because the second port receives a plurality of second messages. Alternatively, the first network device replies, to the second port through the first port, with a second message carrying the port status of the first port, so that the second network device can determine that the first port is in the non-master state and therefore does not process the second message, thereby preventing the 1588 function of the second port from being disabled.

## Description

### CROSS-REFERENCE TO RELATED APPLICATIONS

This application claims priority to Chinese Patent Application No. 202010924424.2, filed on September 4, 2020 and entitled "MESSAGE PROCESSING METHOD, APPARATUS, AND SYSTEM, DEVICE, AND STORAGE MEDIUM", which is incorporated herein by reference in its entirety.

### TECHNICAL FIELD

This application relates to the field of clock technologies, and in particular, to a message processing method, apparatus, and system, a device, and a storage medium.

### BACKGROUND

To meet more high-precision time synchronization requirements, the institute of electrical and electronics engineers (institute of electrical and electronics engineers, IEEE) 1588 protocol standard emerges. The full name of the IEEE 1588 protocol standard is the precision clock synchronization protocol standard (IEEE 1588 precision clock synchronization protocol) for network measurement and control systems, which is referred to as the precision time protocol (precision time protocol, PTP) for short.

As an application scope of the IEEE 1588 protocol standard is increasingly wide, there are more scenarios in which time synchronization is performed by using a 1588 message. In a one-to-many port communication system, applying a 1588 message to perform time synchronization is one of the application scenarios. One-to-many ports include one master port and a plurality of slave ports, and each port corresponds to one network device.

How to support 1588 message exchange in the one-to-many port communication system is an urgent problem to be resolved currently.

### SUMMARY

This application provides a message processing method, apparatus, and system, a device, and a storage medium, to resolve the problem in the related art. Technical solutions are provided below.

According to a first aspect, a message processing method is provided. For a communication system including at least three network devices, a port status of one of the at least three network devices is a master state, and port statuses of the other network devices are non-master states. For example, the method is applied to a first network device in the communication system. The first network device receives, through a first port, a first message sent by a second port, where the first port is a port of the first network device, the second port is a port of a second network device in the communication system, and the first message is used to measure a delay. The first network device stops replying with a second message based on a port status of the first port being a non-master state, where the second message includes a response message and a follow_up message.

For example, the first message is a peer delay request (pdelay_req) message, and the second message includes a peer delay response (pdelay_resp) message and a peer delay response follow_up (pdelay_resp_follow_up) message. According to the current 802.1AS protocol, when a node receives a plurality of pdelay_resp messages and a plurality of pdelay_resp_follow _up messages, the node disables a 1588 function of the local port. However, in the message processing method, in a case that the first port receiving the first message is in the non-master state, the first network device stops replying with the second message, to prevent a 1588 function of the second port from being disabled due to receiving of a plurality of second messages.

In a possible implementation, after the first network device receives, through the first port, the first message sent by the second port, the first network device replies with the second message to the second port through the first port based on the port status of the first port being the non-master state, where the second message carries the port status of the first port.

Because the second message carries the port status of the first port, the second network device can determine that the first port is in the non-master state and therefore does not process the second message, to prevent the 1588 function of the second port of the second network device from being disabled.

In a possible implementation, that a port status of the first port is a non-master state includes: the port status of the first port is a listening state, a pre_master state, an uncalibrated state, a passive state, or a slave state. A plurality of port statuses, such as the listening state, the pre _master state, the uncalibrated state, the passive state, and the slave state, are all used as non-master states, so that the message processing method is applied to more comprehensive scenarios.

In a possible implementation, that the first network device stops replying with a second message based on a port status of the first port being a non-master state includes: The first network device stops replying with the second message based on the port status of the first port being the non-master state and a first condition.

In a case that the port status of the first port is the non-master state and the first condition is met, replying with the second message is stopped, so that the scenario in which replying with the second message is stopped is more accurate.

In a possible implementation, the first condition includes: a clock identity in the first message is inconsistent with a clock identity of a master node. The clock identity of the master node is obtained from an announce message, a sync message, or a follow_up message sent by the master node, that is, a port in a master state. If the first network device is the master node, a clock identity of the first network device is the clock identity of the master node.

Whether the clock identity in the first message is consistent with the clock identity of the master node can reflect whether a port status of the second port is a non-master state. The inconsistency between the clock identity in the first message and the clock identity of the master node is used as the first condition, so that replying with the second message is stopped in a case that the port statuses of the first port and the second port are both non-master states. The first condition can be effectively and conveniently obtained without carrying additional information in the first message.

In a possible implementation, the first condition includes: a source media access control (media access control, MAC) address in the first message is inconsistent with a MAC address of a master node.

Whether the MAC address in the first message is consistent with the MAC address of the master node can reflect whether a port status of the second port is a non-master state. The inconsistency between the MAC address in the first message and the MAC address of the master node is used as the first condition, so that replying with the second message is stopped in a case that the port statuses of the first port and the second port are both non-master states. The first condition can be effectively and conveniently obtained without carrying additional information in the first message.

In a possible implementation, the first condition includes: a source internet protocol (Internet Protocol, IP) address in the first message is inconsistent with an IP address of a master node.

Whether the IP address in the first message is consistent with the IP address of the master node can reflect whether a port status of the second port is a non-master state. The inconsistency between the IP address in the first message and the IP address of the master node is used as the first condition, so that replying with the second message is stopped in a case that the port statuses of the first port and the second port are both non-master states. The first condition can be effectively and conveniently obtained without carrying additional information in the first message.

In a possible implementation, the first message carries a port status of the second port, and the first condition includes: the port status of the second port that is carried in the first message is the listening state, the pre _master state, the uncalibrated state, the passive state, or the slave state.

The first message carries the port status of the second port, so that the first network device can directly obtain the first condition based on the first message.

According to a second aspect, a message processing method is provided. For a communication system including at least three network devices, a port status of one of the at least three network devices is a master state, and port statuses of the other network devices are non-master states. In an example in which the method is applied to a second network device in the communication system, the second network device sends a first message to a first port through a second port, where the second port is a port of the second network device, the first port is a port of a first network device, and the first message is used to measure a delay; and the second network device receives, through the second port, a second message replied through the first port, and the second network device stops processing the second message based on a port status of the first port being a non-master state, where the second message includes a response message and a follow _up message.

Stopping processing the second message may also be understood as skipping processing the second message.

For example, the first message is a pdelay_req message, and the second message includes a pdelay_resp message and a pdelay_respfollow_up message. According to the current 802.1AS protocol, when a node receives a plurality of pdelay_resp messages and a plurality of pdelay_resp_follow _up messages, the node disables a 1588 function of the local port. However, in the message processing method, in a case that the first port sending the second message is in the non-master state, the second network device stops processing the second message, to prevent a 1588 function of the second port of the second network device from being disabled.

In a possible implementation, if a clock identity in the second message is inconsistent with a clock identity of a master node, the port status of the first port is the non-master state.

Whether the port status of the first port is the non-master state is obtained by using the clock identity, without carrying additional information in the second message. The manner of determining the port status is relatively effective and convenient.

In a possible implementation, if a source media access control MAC address in the second message is inconsistent with a MAC address of a master node, the port status of the first port is the non-master state.

Whether the port status of the first port is the non-master state is determined by using the source MAC address, without carrying additional information in the second message. The manner of determining the port status is relatively effective and convenient.

In a possible implementation, if a source internet protocol IP address in the second message is inconsistent with an IP address of a master node, the port status of the first port is the non-master state.

Whether the port status of the first port is the non-master state is determined by using the source IP address, without carrying additional information in the second message. The manner of determining the port status is relatively effective and convenient.

In a possible implementation, if the second message carries the port status of the first port, and the port status of the first port that is carried in the second message is a listening state, a pre_master state, an uncalibrated state, a passive state, or a slave state, the port status of the first port is the non-master state.

The second message carries the port status of the first port, so that the second network device can directly determine the port status of the first port based on the second message, and the manner of determining the port status is more direct.

In a possible implementation, that the second network device stops processing the second message based on a port status of the first port being a non-master state includes: The second network device stops processing the second message based on the port status of the first port being the non-master state and a second condition.

In a case that the port status of the first port is the non-master state and the second condition is met, processing of the second message is stopped, so that the scenario in which processing of the second message is stopped is more accurate.

In a possible implementation, the second condition includes: a port status of the second port is a listening state, a pre_master state, an uncalibrated state, a passive state, or a slave state.

That the port status of the second port is the listening state, the pre _master state, the uncalibrated state, the passive state, or the slave state is used as the second condition, so that the message processing method is applied to more comprehensive scenarios.

In a possible implementation, the first message carries the port status of the second port. The first message carries the port status of the second port, so that the first network device that receives the first message can directly determine the port status of the second port based on the first message.

According to a third aspect, a message processing apparatus is provided, where the apparatus includes:
a receiving module, configured to receive, through a first port, a first message sent by a second port, where the first port is a port of a first network device, the second port is a port of a second network device, and the first message is used to measure a delay; and
a processing module, configured to stop replying with a second message based on a port status of the first port being a non-master state, or reply with a second message to the second port through the first port, where the second message carries the port status of the first port, and the second message includes a response message and a follow_up message.

In a possible implementation, that a port status of the first port is a non-master state includes: the port status of the first port is a listening state, a pre _master state, an uncalibrated state, a passive state, or a slave state.

In a possible implementation, the processing module is configured to stop replying with the second message based on the port status of the first port being the non-master state and a first condition.

In a possible implementation, the first condition includes: a clock identity in the first message is inconsistent with a clock identity of a master node.

In a possible implementation, the first condition includes: a source media access control MAC address in the first message is inconsistent with a MAC address of a master node.

In a possible implementation, the first condition includes: a source internet protocol IP address in the first message is inconsistent with an IP address of a master node.

In a possible implementation, the first message carries a port status of the second port, and the first condition includes: the port status of the second port that is carried in the first message is the listening state, the pre _master state, the uncalibrated state, the passive state, or the slave state.

According to a fourth aspect, a message processing apparatus is provided, where the apparatus includes:
a sending module, configured to send a first message to a first port through a second port, where the second port is a port of a second network device, the first port is a port of a first network device, and the first message is used to measure a delay;
a receiving module, configured to receive, through the second port, a second message replied through the first port, where the second message includes a response message and a follow_up message; and
a processing module, configured to stop processing the second message based on a port status of the first port being a non-master state.

In a possible implementation, if a clock identity in the second message is inconsistent with a clock identity of a master node, the port status of the first port is the non-master state.

In a possible implementation, if a source media access control MAC address in the second message is inconsistent with a MAC address of a master node, the port status of the first port is the non-master state.

In a possible implementation, if a source internet protocol IP address in the second message is inconsistent with an IP address of a master node, the port status of the first port is the non-master state.

In a possible implementation, if the second message carries the port status of the first port, and the port status of the first port that is carried in the second message is a listening state, a pre_master state, an uncalibrated state, a passive state, or a slave state, the port status of the first port is the non-master state.

In a possible implementation, the processing module is configured to stop processing the second message based on the port status of the first port being the non-master state and a second condition.

In a possible implementation, the second condition includes: a port status of the second port is a listening state, a pre_master state, an uncalibrated state, a passive state, or a slave state.

In a possible implementation, the first message carries the port status of the second port.

A network device is further provided. The network device includes a memory and a processor, where the memory stores at least one instruction, and the at least one instruction is loaded and executed by the processor, so that the network device implements the message processing method according to any one of the first aspect or the second aspect above.

A computer-readable storage medium is further provided, storing at least one instruction, where the instruction is loaded and executed by a processor to implement the message processing method according to any one of the foregoing descriptions.

Another communication apparatus is provided. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method in the first aspect or any possible implementation of the first aspect, or perform the method in the first aspect or any possible implementation of the first aspect.

In an example embodiment, there are one or more processors, and there are one or more memories.

In an example embodiment, the memory may be integrated with the processor, or the memory is disposed independently of the processor.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

A computer program (product) is provided. The computer program (product) includes computer program code. When the computer program code is run on a computer, the computer is enabled to perform the methods according to the foregoing aspects.

A chip is provided. The chip includes a processor, configured to: invoke, from a memory, instructions stored in the memory and run the instructions, so that a communication device on which the chip is installed performs the methods in the foregoing aspects.

Another chip is provided. The chip includes an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

### BRIEF DESCRIPTION OF DRAWINGS

FIG. 1 is a schematic diagram of a structure of a PTP message header according to an embodiment of this application;
FIG. 2 is a schematic diagram of a structure of a pdelay_req message according to an embodiment of this application;
FIG. 3 is a schematic diagram of a structure of a pdelay_resp message according to an embodiment of this application;
FIG. 4 is a schematic diagram of a structure of a pdelay_resp_follow _up message according to an embodiment of this application;
FIG. 5 is a schematic diagram of a structure of a communication system according to an embodiment of this application;
FIG. 6 is a schematic diagram of a message exchange procedure according to an embodiment of this application;
FIG. 7 is a schematic flowchart of a message processing method according to an embodiment of this application;
FIG. 8 is a schematic diagram of a format of a 1588 message according to an embodiment of this application;
FIG. 9 is a schematic diagram of a format of another 1588 message according to an embodiment of this application;
FIG. 10 is a flowchart of a message processing method according to an embodiment of this application;
FIG. 11 is a schematic diagram of a structure of a message processing apparatus according to an embodiment of this application;
FIG. 12 is a schematic diagram of a structure of a message processing apparatus according to an embodiment of this application;
FIG. 13 is a schematic diagram of a structure of a network device according to an embodiment of this application; and
FIG. 14 is a schematic diagram of a structure of a network device according to an embodiment of this application.

### DESCRIPTION OF EMBODIMENTS

Terms used in an implementation part of this application are merely used to explain embodiments of this application, and are not intended to limit this application.

As more and more communication systems have high-precision time synchronization requirements, the application scope of the IEEE 1588 protocol becomes increasingly wide. The IEEE 1588 standard is referred to as a precision time protocol (precision time protocol, PTP). The PTP protocol defines two transmission delay measurement mechanisms: a request_response (request_response) mechanism and a peer delay (peer delay) mechanism. In IEEE 1588v2, three types of PTP messages in the peer-delay mechanism (peer-delay mechanism) are included: a peer delay request (pdelay_req) message, a peer delay response (pdelay_resp) message, and a peer delay response follow_up (pdelay_resp_follow_up) message. In addition, a signaling (signaling) message and an announce (announce) message are further added.

IEEE 802. 1AS-2020 is a profile (Profile) of IEEE 1588v2 and is mainly used in fields such as industrial and in-vehicle fields. Various PTP messages defined in IEEE 802.1AS-2020 include a PTP message header. For example, a structure of the PTP message header is shown in FIG. 1. The PTP message header includes a major standard organization identity (majorSdoId) field, a message type (message type) field, a minor PTP version (minor version PTP) field, a PTP version (version PTP) field, a message length (message length) field, a PTP domain sequence number (domain number) field, a minor standard organization identity (minorSdoId) field, a flags (flags) field, a correction field (correction field) field, a message type specific (message type specific) field, a source port identity (source port identity) field, a sequence identity (sequence ID) field, a control field (control field) field, and a log message interval (log message interval) field. The fields of the PTP message header are described as follows.

For a message type (message type), different values represent different PTP messages. For a PTP version (version PTP), if the PTP version is PTP version 1, the value of version PTP is 1; and if the version PTP is PTP version 2, the value of version PTP is 2. For a PTP domain sequence number (domain number), a value of a PTP domain number (domain number) field is a default data set domain number (defaultDS domain Number), which is a variable. Flags (flags) carry various marks. Correction field (correction field): It transmits residence time of a transparent clock, link delay of a point-to-point transparent clock, asymmetric compensation, and the like. Source port identity (source port identity): It is a related attribute of a sending port. Sequence ID (sequence ID): It is used to distinguish a plurality of messages of the same type with the same sending port. For a control field (control field), a value of the control field is determined by a value of a message type field. That is, the value of the control field varies according to the message type. A log message interval (log message interval) carries a logarithmic interval for sending messages, and a value of the log message interval is a logarithm of 2.

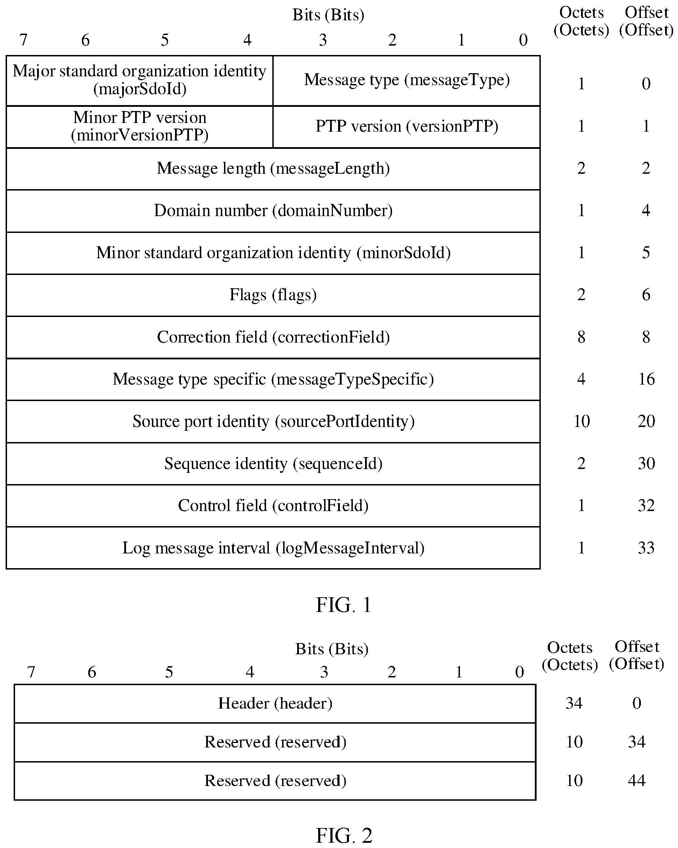

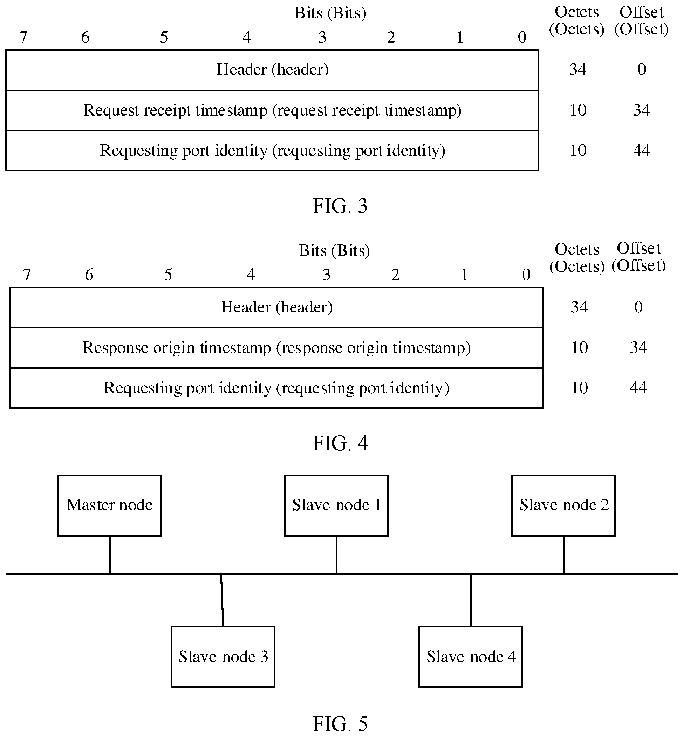

A structure of a pdelay_req message is shown in FIG. 2, and includes a header (header) field (for details, refer to 11.4.2) and a reserved (reserved) field. A structure of a pdelay_resp message is shown in FIG. 3, and includes a header (header) field (for details, refer to 11.4.2), a request receipt timestamp (request receipt timestamp) field, and a requesting port identity (requesting port identity) field. As shown in FIG. 4, a pdelay_resp_follow_up message includes a header (header) field (for details, refer to 11.4.2), a response origin timestamp (response origin timestamp) field, and a requesting port identity (requesting port identity) field.

With the increasingly wide application scope of the IEEE 1588 protocol standard, there are more and more scenarios in which clock synchronization is performed by using a 1588 message. The 1588 message can be applied not only to a one-to-one port communication system, but also to a one-to-many port communication system. One-to-one ports include one master port and one slave port; and one-to-many ports include one master port and a plurality of slave ports. Whether a port is a one-to-one port or a one-to-many port, each port corresponds to one network device. In embodiments of this application, a network device corresponding to a master port is referred to as a master (master) node, and a network device corresponding to a slave port is referred to as a slave (slave) node.

An application scenario of applying a 1588 message in a 10BASE-T1S scenario in the in-vehicle field is used as an example. 10BASE-T1S is a technology that uses a single unshielded twisted pair bus line to connect a plurality of Ethernet devices. 10Base represents a speed level of 10 Mbps, T1 represents that a physical layer is a single twisted pair (unshielded), and S represents a short range (short range). The 10BASE-T1S may be applied to a one-to-many port communication system.

For example, a one-to-many port communication system shown in FIG. 5 is used as an example. One master node communicates with four slave nodes respectively, and the four slave nodes are a slave node 1, a slave node 2, a slave node 3, and a slave node 4. In the one-to-many port communication system, 10BASE-T1S uses the IEEE 802.1AS protocol to implement a 1588 function. The IEEE 802.1AS protocol defines a precise clock synchronization system in a broad sense. As the basis of a time sensitive networking (time sensitive networking, TSN) standard cluster, the IEEE 802.1AS protocol provides the basic time synchronization function for other standards in the TSN. Implementing and testing the IEEE 802.1AS protocol is important for understanding the TSN.

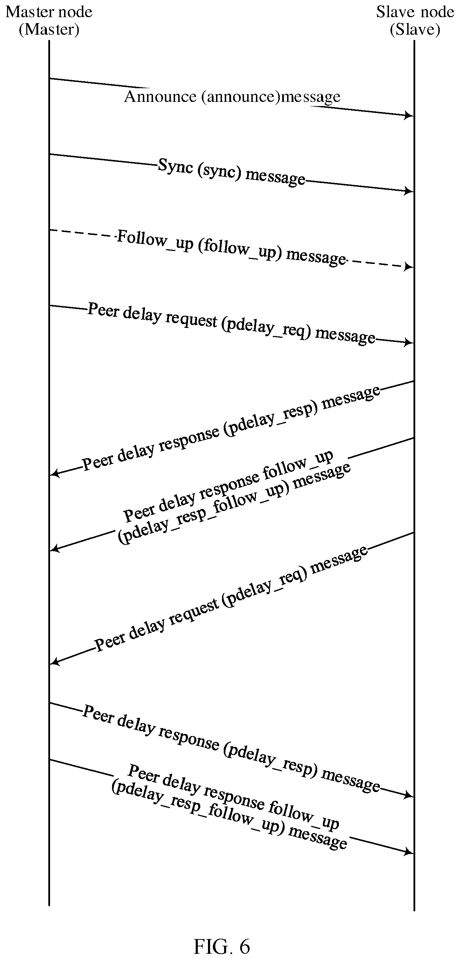

FIG. 6 shows a message exchange procedure between a master node and a slave node defined in the current 802.1AS protocol, including an exchange process of the following messages.
(1) The master (master) node sends an announce (announce) message and a sync (sync) message to the slave (slave) node.
   If the master node is configured to work in two-step mode, the master node further sends a follow_up message to the slave node. If the master node is configured to work in one-step mode, the master node does not need to send a follow_up message to the slave node.
(2) A peer delay (pdelay) message is transmitted between the master node and the slave node. The transmission of the pdelay message is irrelevant to a port status.

For example, the master node sends a peer delay request (pdelay_req) message to the slave node, and the slave node replies with a peer delay response (pdelay_resp) message and a peer delay response follow_up (pdelay_resp_follow_up) message to the master node. In this case, the master node may calculate a link delay between the master node and the slave node and a frequency offset of the master node relative to the slave node.

For another example, the slave node can also send a pdelay_req message to the master node, and the master node replies with a pdelay_resp message and a pdelay_resp_follow_up message to the slave node. In this case, the slave node may calculate a link delay between the master node and the slave node and a frequency offset of the slave node relative to the master node.

For a common one-to-one Ethernet interface, a port status of a port switches. For example, a port of the master node switches from the master (master) state to the slave (slave) state, and a port of the slave node switches from the slave state to the master state. Therefore, in the common Ethernet interface scenario, the master node needs to send a pdelay_req message to the slave node to calculate a delay between the master node and the slave node and a frequency offset of the master node relative to the slave node. After the switching is completed, the time can be quickly locked.

IEEE 1588 messages defined in the 802.1AS protocol are encapsulated in multicast mode. For 10BASE-T1S, when the master node sends an announce message, a sync message, and a follow_up message, the announce message, the sync message, and the follow_up message can be received by a plurality of slave nodes. However, when the master node sends a pdelay_req message, a plurality of slave nodes receive the pdelay_req message. Each slave node then replies with a pdelay_resp message and a pdelay_resp_follow_up message to the master node. Therefore, the master node receives a plurality of pdelay_req messages and a plurality of pdelay_resp_follow_up messages.

However, according to the current 802.1AS protocol, when a node receives a plurality of pdelay_resp messages and a plurality of pdelay_resp follow _up messages, the node disables a 1588 function of the local port. Therefore, the master node disables the 1588 function of the local port, so that other slave nodes cannot obtain a 1588 time from the master node.

After sending a pdelay_req message, a slave node also receives a plurality of pdelay_resp messages and a plurality of pdelay_resp follow _up messages. As a result, a 1588 function of the local port of the slave node is disabled.

In 10BASE-T1S, port statuses of the master node and slave node are fixed. Therefore, the master node does not need to calculate a delay between the master node and the slave node and a frequency offset of the master node relative to the slave node by using the pdelay message. Therefore, a pdelay message sending interval of the master node is set to 127 (see section 10.6.4.3.6 in the IEEE 802.1AS-2020 protocol). In this way, the master node does not send a pdelay_req message to the slave node, and the master node does not receive a plurality of pdelay_resp messages and a plurality of pdelay_resp_follow_up messages to be processed. The 1588 function of the port of the master node is not disabled. However, when the slave node sends a pdelay_req message, a plurality of Pdelay_Resp messages and a plurality of Pdelay_Resp_Follow_Up messages are to be received. As a result, the problem persists.

For example, when a target slave node in a plurality of slave nodes sends a pdelay_req message, the master node and other slave nodes in the plurality of slave nodes all receive the pdelay_req message. The master node and each slave node that receives the pdelay_req message reply with a pdelay_resp message and a pdelay_resp_follow_up message to the target slave node. As a result, the target slave node receives a plurality of pdelay_req messages and a plurality of pdelay_resp_follow_up messages. According to the current 802.1AS protocol, when a node receives a plurality of pdelay_resp messages and a plurality of pdelay_resp follow _up messages, the node disables a 1588 function of the local port. Therefore, according to the 1588 function defined in the current 802.1AS protocol, the 1588 function of 10BASE-T1S cannot be used normally.

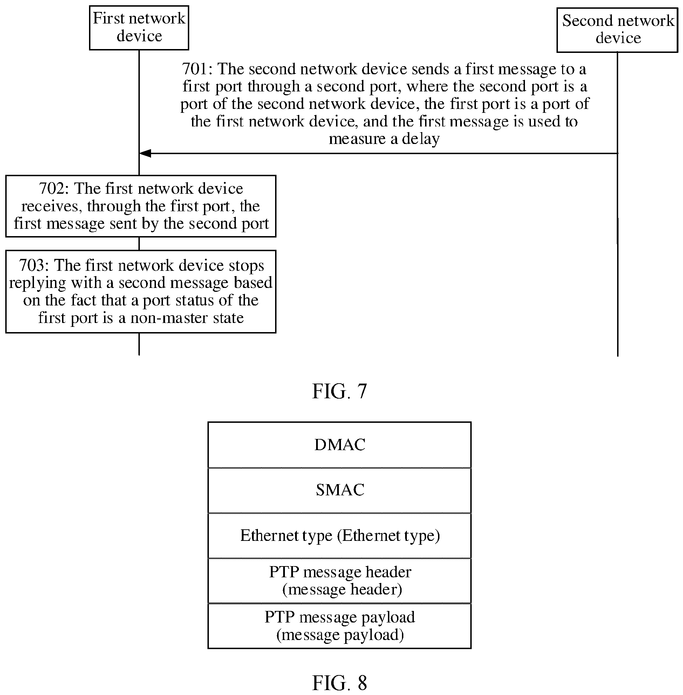

In view of this, an embodiment of this application provides a message processing method, so that a slave node in a 10BASE-T1S scenario can normally transmit a 1588 message. The method may be applied to a communication system including at least three network devices, where a port status of a port of one of the at least three network devices is a master state, and port statuses of ports of the other network devices are non-master states. For example, in this embodiment of this application, an interaction process between a first network device and a second network device in the at least three network devices is used as an example to describe the message processing method provided in this embodiment of this application. Refer to FIG. 7. The method includes the following several processes.

**701: A second network device sends a first message to a first port through a second port, where the second port is a port of the second network device, the first port is a port of a first network device, and the first message is used to measure a delay.**

The second network device and the first network device are located in the same communication system. Port statuses of the first port and the second port are not limited in this embodiment of this application. In the IEEE1588 protocol, the following port statuses are included.
(1) Initializing (initializing) state: A port is in the initializing state. After the initialization is completed, the port status changes to a listening (listening) state. The port in the initializing state cannot send any 1588 message.
(2) Faulty (faulty) state: If a port is faulty, the port is set to the faulty state. The port in the faulty state cannot send any 1588 message but can respond to a received 1588 management message.
(3) Disabled (disabled) state: A port in the disabled state cannot send any 1588 message. The disabled port discards received 1588 messages except a 1588 management message.
(4) Listening (listening): A port in this state can receive messages and send a pdelay_req message, a pdelay_resp message, a pdelay_resp follow up message, a signaling (signaling) message, and a management (management) message, but cannot send other messages.
(5) Pre_master (pre_master) state: The pre_master state is similar to the master state, and is a state in which only a pdelay_req message, a pdelay_resp message, a pdelay_resp_follow_up message, a signaling message, and a management message can be sent.
(6) Master (master) state: A port in the master state can send messages that need to be sent, such as an announce message, a sync message, a follow_up message, a pdelay_req message, a pdelay_resp message, a pdelay_resp_follow_up message, a signaling message, and a management message.
(7) Passive (passive) state: A port in the passive state can send only a pdelay_req message, a pdelay_resp message, a pdelay_resp_follow_up message, a signaling message, and a management message.
(8) Uncalibrated (uncalibrated) state: The uncalibrated state is a transition state. The uncalibrated state indicates that a master clock source is selected and is being synchronized. A port in the uncalibrated state can send a pdelay_req message, a pdelay_resp message, a pdelay_resp_follow_up message, a signaling message, and a management message.
(9) Slave (slave) state: The slave state is a state after a device is synchronized and stable. A port in the slave state can send a pdelay_req message, a pdelay_resp message, a pdelay_resp_follow_up message, a signaling message, and a management message.

The first message sent by the second network device to the first port through the second port is used for delay measurement. For example, the first message is a pdelay_req message.

**702: The first network device receives, through the first port, the first message sent by the second** port.

In an example embodiment, the first message is a pdelay_req message. After receiving the pdelay_req message, the first network device is to reply with a pdelay_resp message and a pdelay_respfollow_up message to the second network device. However, because the first network device and the second network device are in the one-to-many port communication system, according to the current 802.1AS protocol, when a network device receives a plurality of pdelay_resp messages and a plurality of pdelay_resp follow _up messages, the network device disables a 1588 function of a port receiving the messages. In this case, after receiving, through the first port, the first message sent by the second port, the first network device further determines, based on the status of the first port, whether to reply with the pdelay_resp message and the pdelay_resp_follow_up message.

In this embodiment of this application, if the port status of the first port is a listening state, a pre master state, an uncalibrated state, a passive state, or a slave state, the port status of the first port is a non-master state.

In an example embodiment, in addition to determining, based on the port status of the first port, whether to reply with the second message, the first network device further needs to consider the port status of the second port, to determine, based on the port status of the first port and a first condition, whether to reply with the second message, that is, the pdelay_resp message and the pdelay_resp_follow_up message.

The first condition is not limited in embodiments of this application, and includes but is not limited to any one of the following four cases.

**In a first case,** the first condition includes: a clock identity in the first message is inconsistent with a clock identity of a master node.

When each network device in the 10BASE-T1S scenario receives a pdelay_req message, the pdelay_req message includes a clock identity. If the clock identity in the first message is inconsistent with the clock identity of the master node, it indicates that the second port sending the first message is not in the master state. For example, the first eight bytes in a source port identity field of a message header of the pdelay_req message are the clock identity (clock identity). If the clock identity in the message header of the pdelay_req message is inconsistent with the clock identity of the master clock, the first network device determines that the second port is in a non-master state, that is, obtains the first condition. If the clock identity in the message header of the pdelay_req message is consistent with the clock identity of the master clock, the first network device determines that the second port is in the master state.

The clock identity of the master node is obtained from an announce message, a sync message, or a follow_up message sent by the master node, that is, a port in the master state; or if the local node is the master node, a clock identity of the local node is the clock identity of the master node.

**In a second case,** the first condition includes: a source media access control (media access control, MAC) address in the first message is inconsistent with a MAC address of a master node.

In addition to identifying the port status of the second port by using the clock identity of the master node, the method provided in this embodiment of this application further supports identifying the port status of the second port by using the source MAC address of the master node. For example, if a 1588 message format is transmitted through Ethernet encapsulation, for example, the 1588 standard 802.1AS used by a current in-vehicle standard is Ethernet encapsulation, a complete 1588 message format is shown in FIG. 8. A 1588 message includes a destination MAC (destination MAC, DMAC) field, a source MAC (source MAC, SMAC) field, an Ethernet type (Ethernet type) field, a PTP message header (PTP message header) field, and a PTP message payload (PTP message payload) field.

The first network device determines whether the port status of the second port is the non-master state by comparing whether the source MAC address of the first message is consistent with the MAC address of the master node. For example, the first network device determines that the port status of the second port is the non-master state by comparing that the source MAC address of the first message is inconsistent with the MAC address of the master node, that is, obtains the first condition. The first network device determines that the port status of the second port is the master state by comparing that the source MAC address of the first message is consistent with the MAC address of the master node.

The MAC address of the master node may be obtained from an announce message, a sync message, or a follow_up message sent by the master node, that is, a port in the master state; or if the local node is the master node, a MAC address of the local node is the MAC address of the master node.

**In a third case,** the first condition includes: a source internet protocol IP address in the first message is inconsistent with an IP address of a master node.

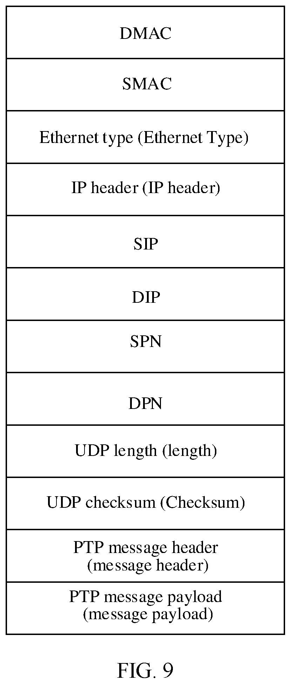

The method provided in this embodiment of this application further supports identifying the port status of the second port by using the source IP address of the master node. For example, if a 1588 message format is transmitted through IP encapsulation, a complete 1588 message format is shown in FIG. 9. A 1588 message includes a DMAC field, an SMAC field, an Ethernet type (Ethernet type) field, an IP header (IP header) field, a source IP (source internet protocol, SIP) field, a destination IP (destination internet protocol, DIP) field, a source port number (source port number, SPN) field, a destination port number (destination port number, DPN) field, a UDP length (UDP length) field, a UDP checksum (UDP checksum) field, a PTP message header (PTP message header) field, and a PTP message payload (PTP message payload) field.

The first network device determines whether the port status of the second port is the non-master state by comparing whether the source IP address of the first message is consistent with the IP address of the master node. For example, the first network device determines that the port status of the second port is the non-master state by comparing that the source IP address of the first message is inconsistent with the IP address of the master node, that is, obtains the first condition. The first network device determines that the port status of the second port is the master state by comparing that the source IP address of the first message is consistent with the IP address of the master node.

The IP address of the master node may be obtained from an announce message, a sync message, or a follow_up message sent by the master node, that is, a port in the master state; or if the local node is the master node, an IP address of the local node is the IP address of the master node.

**In a fourth case,** the first message carries a port status of the second port, and the first condition includes: the port status of the second port that is carried in the first message is the listening state, the pre _master state, the uncalibrated state, the passive state, or the slave state. For a manner in which the first message carries the port status of the second port, refer to a manner in which the second message carries the port status of the first port in the following 1003, and details are not described herein.

For example, if the port status of the second port that is carried in the first message is the listening state, the pre_master state, the uncalibrated state, the passive state, or the slave state, the first network device determines that the second port is in the non-master state, and obtains the first condition. If the port status of the second port that is carried in the first message is the master state, the first network device determines that the second port is in the master state.

**703: The first network device stops replying with a second message based on a port status of the first port being a non-master state.**

By determining the port status of the first port that receives the first message, when the port status of the first port is the non-master state, the first network device stops replying with the second message, to prevent the second network device from receiving a plurality of second messages. For example, the second message includes a pdelay_resp message and a pdelay_respfollow_up message. In other words, a network device whose port status is a non-master state does not reply with a pdelay_resp message and a pdelay_resp follow _up message, and only a network device with the master port replies with a pdelay_resp message and a pdelay_resp_follow_up message. Therefore, the network device that sends the pdelay_req message does not receive a plurality of pdelay_resp messages and a plurality of pdelay_resp follow _up messages, and the network device that sends the pdelay_ req message is not faulty. It should be noted that for a 10BASE-T1S interface in this embodiment of this application, there is only one port whose port status is a master state.

In an example embodiment, in this embodiment of this application, the first network device stops replying with the second message based on the port status of the first port being the non-master state and the first condition, to prevent the second network device from receiving a plurality of second messages. That is, if the port that sends the pdelay_req message is in the non-master state and the port that receives the pdelay_req message is in the non-master state, the network device of the receiving port does not reply with a pdelay_resp message and a pdelay_resp follow up message. Therefore, the network device that sends the pdelay_req message does not receive a plurality of pdelay_resp messages and a plurality of pdelay_resp follow _up messages, and the network device that sends the pdelay_req message is not faulty.

Therefore, according to the message processing method provided in this embodiment of this application, a 1588 message can be normally transmitted in a 10BASE-T1S scenario, to ensure that 1588 time synchronization can be normally obtained when 10BASE-T1S is used in the in-vehicle field and other fields.

It should be noted that, if the port status of the second port is the non-master state, and the port status of the first port is the master state, the first network device replies with a pdelay_resp message and a pdelay_resp_follow_up message to the second port through the first port, so that the second network device where the second port is located can perform time synchronization normally. In an example embodiment, if the port status of the first port is the master state, the first port of the first network device normally replies with a pdelay_resp message and a pdelay_resp_follow_up message to the second port of the second network device, but the port of the network device whose port status is the non-master state does not reply with a pdelay_resp message and a pdelay_resp follow_up message, to prevent the port of the network device that sends the pdelay_req message from receiving a plurality of pdelay_resp messages and a plurality of pdelay_resp follow_up messages.

According to the port statuses defined in the IEEE 1588v2 protocol, when a port is in the Master/Slave/Uncalibrated/Pre_master/Listening/Passive state, the port needs to send a pdelay_req message and reply with a pdelay_resp message and a pdelay_resp follow _up message. However, according to the method provided in this embodiment of this application, only a port whose port status is the Master state needs to reply with a pdelay_resp message and a pdelay_resp_follow_up message. Therefore, it may be specified that the port does not need to reply with a pdelay_resp message and a pdelay_resp follow _up message when the port status is the Slave/Uncalibrated/Pre_master/Listening/Passive state.

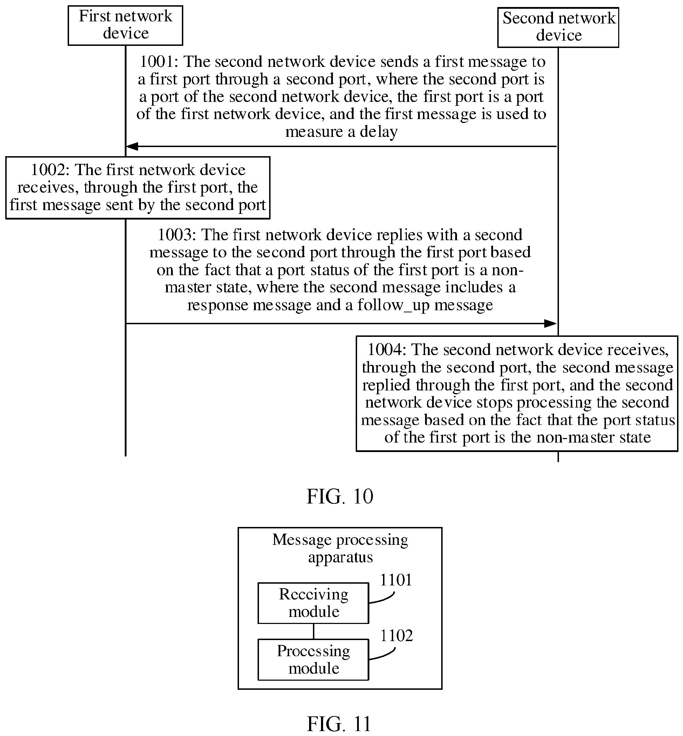

In an example embodiment, when the port status of the first port that receives the first message is the non-master state, in addition to the manner in which the first network device stops replying with the second message, the method provided in this embodiment of this application further supports another manner of normally transmitting the 1588 message in the 10BASE-T1S scenario. Refer to FIG. 10. A message processing method provided in an embodiment of this application includes the following several processes.

**1001: A second network device sends a first message to a first port through a second port, where the second port is a port of the second network device, the first port is a port of a first network device, and the first message is used to measure a delay.**

The second network device and the first network device are located in a same communication system. The communication system includes at least three network devices, where a port status of a port of one of the at least three network devices is a master state, and port statuses of ports of the other network devices are non-master states. For example, in this embodiment of this application, an interaction process between a first network device and a second network device in the at least three network devices is used as an example to describe the message processing method provided in this embodiment of this application. Port statuses of the first port and the second port are not limited in embodiments of this application. For the port statuses, refer to related descriptions of 701 above, and details are not described herein again. For example, the first message is used to measure a delay, and is, for example, a pdelay_req message.

**1002: The first network device receives, through the first port, the first message sent by the second port.**

For example, the first message is a pdelay_req message. After receiving the pdelay_req message, the first network device is to reply with a second message to the second network device, for example, a pdelay_resp message and a pdelay_resp follow up message. However, because the first network device and the second network device are in a one-to-many port communication system, according to the current 802.1AS protocol, when a network device receives a plurality of pdelay_resp messages and a plurality of pdelay_resp_follow_up messages, the network device disables a 1588 function of a port that receives the plurality of pdelay_resp messages and the plurality of pdelay_resp_follow_up messages. Therefore, after receiving, through the first port, the first message sent by the second port, the first network device needs to determine a port status of the first port, to further determine, based on the port status of the first port, whether to reply with the pdelay_resp message and the pdelay_resp follow _up message. In an example embodiment, in addition to determining, based on the port status of the first port, whether to reply with the second message, the first network device may further consider a first condition, and further determine, based on the port status of the first port and the first condition, whether to reply with the pdelay_resp message and the pdelay_resp follow _up message.

For a manner in which the first network device determines the port status of the first port and the first condition, refer to related descriptions of 702, and details are not described herein again.

**1003: The first network device replies with a second message to the second port through the first port based on a port status of the first port being a non-master state, where the second message includes a response message and a follow_up message.**

In an example embodiment, after determining that the port status of the first port is the non-master state, the first network device may not reply with the second message, for example, may not reply with a pdelay_resp message and a pdelay_resp_follow_up message, to prevent the network device that sends the pdelay_req message from receiving a plurality of pdelay_resp messages and a plurality of pdelay_resp_follow_up messages; otherwise, the network device that sends the pdelay_req message is to disable a 1588 function of a port receiving the plurality of pdelay_resp messages and the plurality of pdelay_resp follow _up messages. In addition, the method provided in this embodiment of this application further supports implementation of a function of a 1588 message when the second message is normally replied. However, to prevent the port from being disabled because the network device of the port that sends the pdelay_req message receives a plurality of pdelay_resp messages and pdelay_resp_follow_up messages, in the method provided in this embodiment of this application, the port status of the first port is carried in the second message. In this way, the second network device can determine the port status of the first port, to determine whether to process a received pdelay_resp message and a received pdelay_resp_follow_up message.

In an example embodiment, in addition to determining the port status of the first port, the first network device may further determine whether the first condition is met. Based on the port status of the first port being the non-master state and the first condition, the first network device may not reply with the second message, for example, may not reply with a pdelay_resp message and a pdelay_resp_follow_up message, to prevent the network device that sends the pdelay_req message from receiving a plurality of pdelay_resp messages and a plurality of pdelay_resp_follow_up messages. The network device that sends the pdelay_req message is to disable a 1588 function of a port that receives the plurality of pdelay_resp messages and the plurality of pdelay_resp follow _up messages. In addition, the method provided in this embodiment of this application further supports implementation of a function of a 1588 message when the second message is normally replied. However, to prevent the port from being disabled because the network device that sends the pdelay_req message and whose port is in the non-master state receives a plurality of pdelay_resp messages and pdelay_resp follow _up messages, in the method provided in this embodiment of this application, the port status of the first port is carried in the second message. In this way, the second network device can determine the port status of the first port, to determine whether to process a received pdelay_resp message and a received pdelay_resp_follow_up message.

For example, the first message may also carry the port status of the second port. Manners in which the first message carries the port status of the second port and the second message carries the port status of the first port are not limited in embodiments of this application. For example, for the foregoing nine states, a port status may be carried by using four bits. For example, based on the message header of the PTP message shown in FIG. 1, a flags field of the PTP message header is defined in the IEEE 802.1AS protocol, as shown in Table 1 below. Bit 3/4/7 of the 0^{th} byte and bit 6/7 of the 1st byte are reserved fields, where four bits may be selected to carry a port status in this embodiment of this application.

**Table 1**

| **Octet (Octet)** | **Bit (Bit)** | **Message types (Message types)** | **Name (Name)** | **Value (Value)** |
|---|---|---|---|---|
| 0 | 0 | All (All) | Alternate master flag in Announce, Sync, Follow_Up, and Delay_Resp messages (alternate Master Flag in Announce, Sync, Follow_Up, and Delay_Resp messages) | Not used in this standard; |
| | | | | transmitted as false and ignored on reception (Not used in this standard, transmitted as FALSE and ignored on reception) |
| 0 | 1 | Sync, Pdelay_Resp | Two-step flag (twoStepFlag) | For a Sync message |
| | | | | (a) For a one-step transmitting PTP port, the value is false (For a one-step transmitting PTP Port (see 11.1. 3 and 11.2.13.9), the value is FALSE). (b). For a two-step transmitting PTP port, the value is true (For a two-step transmitting PTP Port, the value is TRUE). For a Pdelay_Resp message, the value is transmitted as true and ignored on reception (The value is transmitted as TRUE and ignored on reception). |
| 0 | 2 | All (All) | Unicast flag (unicast Flag) | Not used in this standard; |
| | | | | transmitted as false and ignored on reception (Not used in this standard, transmitted as FALSE and ignored on reception) |
| 0 | 3 | All (All) | Reserved (Reserved) | Not used by IEEE Std 1588-2019; reserved as false and ignored on reception (Not used by IEEE Std 1588-2019; reserved as FALSE and ignored on reception) |
| 0 | 4 | All (All) | Reserved (Reserved) | Not used by IEEE Std 1588-2019; reserved as false and ignored on reception (Not used by IEEE Std 1588-2019; reserved as FALSE and ignored on reception) |
| 0 | 5 | All (All) | PTP profile Specific 1 | Not used in this standard; transmitted as false and ignored on reception (Not used in this standard, transmitted as FALSE and ignored on reception) |
| 0 | 6 | All (All) | PTP profile Specific 2 | Not used in this standard; transmitted as false and ignored on reception (Not used in this standard, transmitted as FALSE and ignored on reception) |
| 0 | 7 | All (All) | Reserved (Reserved) | Not used in this standard; |
| | | | | transmitted as false and ignored on reception (Not used in this standard, transmitted as FALSE and ignored on reception) |
| 1 | 0 | Announce | leap 61 | The value of the global variable leap 61 (The value of the global variable leap 61) (see 10.3.9.4) |
| 1 | 1 | Announce | leap 59 | The value of the global variable leap 59 (The value of the global variable leap 59) (see 10.3.9.5) |
| 1 | 2 | Announce | Current Utc offset valid (current Utc Offset Valid) | The value of the global variable current Utc offset valid (The value of the global variable current Utc Offset Valid) (see 10.3.9.6) |
| 1 | 3 | Announce | PTP timescale (ptp Timescale) | The value of the global variable PTP timescale (The value of the global variable ptp Timescale) (see 10.3.9.7) |
| 1 | 4 | Announce | time Traceable | The value of the global variable time traceable (The value of the global variable time Traceable) (see 10.3.9.8) |
| 1 | 5 | Announce | frequency Traceable | The value of the global variable frequency traceable (The value of the global variable frequency Traceable) (see 10.3.9.9) |
| 1 | 6 | All (All) | Reserved | Not used by IEEE Std 1588-2019; reserved as false and ignored on reception (Not used by IEEE Std 1588-2019; reserved as FALSE and ignored on reception) |
| 1 | 7 | All (All) | Reserved | Not used in this standard; reserved as false and ignored on reception (Not used in this standard; reserved as FALSE and ignored on reception) |

In addition to the foregoing manner of selecting four bits from the flags field to carry a port status, the method provided in this embodiment of this application further supports a manner of adding one byte to a pdelay_req message, a pdelay_resp message, and a pdelay_resp_follow_up message, so that four bits in the added byte are used to carry the port status.

**1004: The second network device receives, through the second port, the second message replied through the first port, and the second network device stops processing the second message based on the port status of the first port being the non-master state.**

After receiving, through the second port, the second message replied through the first port, the second network device further needs to determine the port status of the first port, to further determine whether to process the second message replied through the first port. The port status of the first port is the non-master state, which includes but is not limited to the following four cases.

Case 1: If the second message carries the port status of the first port, and the port status of the first port that is carried in the second message is a listening state, a pre master state, an uncalibrated state, a passive state, or a slave state, the port status of the first port is the non-master state.

In Case 1, because the second message carries the port status of the first port, after determining, according to the port status of the first port that is carried in the second message, that the port status of the first port is the non-master state, the second network device stops processing the second message. In this way, the second network device does not process a second message sent by another slave node, and processes only the second message replied through the master node, to prevent the second port of the second network device from being disabled due to processing of a plurality of second messages.

In a case in which the second message does not carry the port status of the first port, after the second network device receives, through the second port, the second message replied through the first port, a manner of determining the port status of the first port in any one of the following manners 2 to 4 is further included, but is not limited.

Case 2: If a clock identity in the second message is inconsistent with a clock iidentity of a master node, the port status of the first port is the non-master state.

When each network device in the 10BASE-T1S scenario receives a pdelay_resp message and a pdelay_resp follow up message, the pdelay_resp message and the pdelay_resp follow up message include a clock identity. If the clock identity in the second message is inconsistent with the clock identity of the master node, it indicates that the port status of the first port that sends the second message is not the master state. For example, the first eight bytes in a source port identity field of a message header of the pdelay_resp message and the pdelay_resp_follow_up message are the clock identity (clock identity). If the clock identity in the message header of the pdelay_resp message and the pdelay_resp_follow_up message is inconsistent with the clock identity of the master clock, the second network device determines that the first port is in the non-master state. If the clock identity in the message header of the pdelay_resp message and the pdelay_resp_follow_up message is consistent with the clock identity of the master clock, the second network device determines that the first port is in the master state.

The clock identity of the master clock may be obtained from an announce message, a sync message, or a follow_up message sent by the master node, that is, a port in the master state; or if the local node is the master node, a clock identity of the local node is the clock identity of the master node.

Case 3: If a source MAC address in the second message is inconsistent with a MAC address of a master node, the port status of the first port is the non-master state.

In addition to identifying the port status of the first port by using the clock identity of the master node, the method provided in this embodiment of this application further supports identifying the port status of the first port by using the source MAC address of the master node. For example, if a 1588 message format is transmitted through Ethernet encapsulation, for example, the 1588 standard 802.1AS used by a current in-vehicle standard is Ethernet encapsulation, a complete 1588 message format is shown in FIG. 8. A 1588 message includes a destination MAC (destination MAC, DMAC) field, a source MAC (source MAC, SMAC) field, an Ethernet type (Ethernet type) field, a PTP message header (PTP message header) field, and a PTP message payload (PTP message payload) field.

The second network device determines whether the port status of the first port is the non-master state by comparing whether the source MAC address of the second message is consistent with the MAC address of the master node. For example, the second network device determines that the port status of the first port is the non-master state by comparing that the source MAC address of the second message is inconsistent with the MAC address of the master node. The second network device determines that the port status of the first port is the master state by comparing that the source MAC address of the second message is consistent with the MAC address of the master node.

The MAC address of the master node may be obtained from an announce message, a sync message, or a follow_up message sent by the master node, that is, a port in the master state; or if the local node is the master node, a MAC address of the local node is the MAC address of the master node.

Case 4: If a source IP address in the second message is inconsistent with an IP address of a master node, the port status of the first port is the non-master state.

The method provided in this embodiment of this application further supports identifying the port status of the first port by using the source IP address of the master node. For example, if a 1588 message format is transmitted through IP encapsulation, a complete 1588 message format is shown in FIG. 9. A 1588 message includes a DMAC field, an SMAC field, an Ethernet type field, an IP header (IP header) field, a source IP (source internet protocol, SIP) field, a destination IP (destination internet protocol, DIP) field, a source port number (source port number, SPN) field, a destination port number (destination port number, DPN) field, a UDP length (UDP length) field, a UDP checksum (UDP checksum) field, a PTP message header (PTP message header) field, and a PTP message payload (PTP message payload) field.

The second network device determines whether the port status of the first port is the non-master state by comparing whether the source IP address of the second message is consistent with the IP address of the master node. For example, the second network device determines that the port status of the first port is the non-master state by comparing that the source IP address of the second message is inconsistent with the IP address of the master node. The second network device determines that the port status of the first port is the master state by comparing that the source IP address of the second message is consistent with the IP address of the master node.

The IP address of the master node may be obtained from an announce message, a sync message, or a follow_up message sent by the master node, that is, a port in the master state; or if the local node is the master node, an IP address of the local node is the IP address of the master node.

Optionally, in an example embodiment, the second network device stops processing the second message based on the port status of the first port being the non-master state and a second condition.

For example, the second condition includes: a port status of the second port is a listening state, a pre _master state, an uncalibrated state, a passive state, or a slave state. Based on the first port being in the non-master state and the second condition, even if the second network device receives the second message replied through the first port, the second network device stops processing the second message, to prevent the network device from disabling the 1588 function of the second port that receives the message when receiving a plurality of second messages.

For example, when the second network device where the second port is located determines that the port status of the first port is the non-master state based on the port status of the first port that is carried in the pdelay_resp message and the pdelay_respfollow_up message being the non-master state or based on the source clock identity, the source MAC address, or the source IP address carried in the pdelay_resp message and the pdelay_resp_follow_up message, and the port status of the second port is also the non-master state, the second network device may not process the pdelay_resp message and the pdelay_resp_follow_up message.

It should be noted that, if a network device (a network device whose port is in the master state or the non-master state) does not send a pdelay_req message, but can also receive a pdelay_resp message and a pdelay_resp_follow_up message replied by another network device, and a requesting port identity field in the pdelay_resp message and the pdelay_resp_follow_up message is different from a port identity of a port receiving the messages of the network device, the network device may not process the messages according to the current 802.1AS protocol.

In addition, the method provided in this embodiment of this application is described by using only an example in which a 1588 message is transmitted in a 10BASE-T1S scenario. The method provided in this embodiment of this application is not only applicable to transmitting a 1588 message in a 10BASE-T1S scenario, but also can be applied to another one-to-many port communication system that may occur. An application scenario of the method is not limited in embodiments of this application.

The foregoing describes the message processing method in embodiments of this application. Corresponding to the foregoing method, an embodiment of this application further provides a message processing apparatus. FIG. 11 is a schematic diagram of a structure of a message processing apparatus according to an embodiment of this application. The apparatus is applied to a first network device, and the first network device is the first network device shown in either FIG. 7 or FIG. 10. Based on the following plurality of modules shown in FIG. 11, the message processing apparatus shown in FIG. 11 can perform all or some operations performed by the first network device. It should be understood that the apparatus may include more additional modules than the shown modules or omit some of the shown modules. This is not limited in embodiments of this application. As shown in FIG. 11, the apparatus includes:
a receiving module 1101, configured to receive, through a first port, a first message sent by a second port, where the first port is a port of a first network device, the second port is a port of a second network device, and the first message is used to measure a delay; and
a processing module 1102, configured to stop replying with a second message based on a port status of the first port being a non-master state, or reply with a second message to the second port through the first port, where the second message carries the port status of the first port, and the second message includes a response message and a follow_up message.

In a possible implementation, that a port status of the first port is a non-master state includes: the port status of the first port is a listening state, a pre _master state, an uncalibrated state, a passive state, or a slave state.

In a possible implementation, the processing module 1102 is configured to stop replying with the second message based on the port status of the first port being the non-master state and a first condition.

In a possible implementation, the first condition includes: a clock identity in the first message is inconsistent with a clock identity of a master node.

In a possible implementation, the first condition includes: a source media access control MAC address in the first message is inconsistent with a MAC address of a master node.

In a possible implementation, the first condition includes: a source internet protocol IP address in the first message is inconsistent with an IP address of a master node.

In a possible implementation, the first message carries a port status of the second port, and the first condition includes: the port status of the second port that is carried in the first message is the listening state, the pre _master state, the uncalibrated state, the passive state, or the slave state.

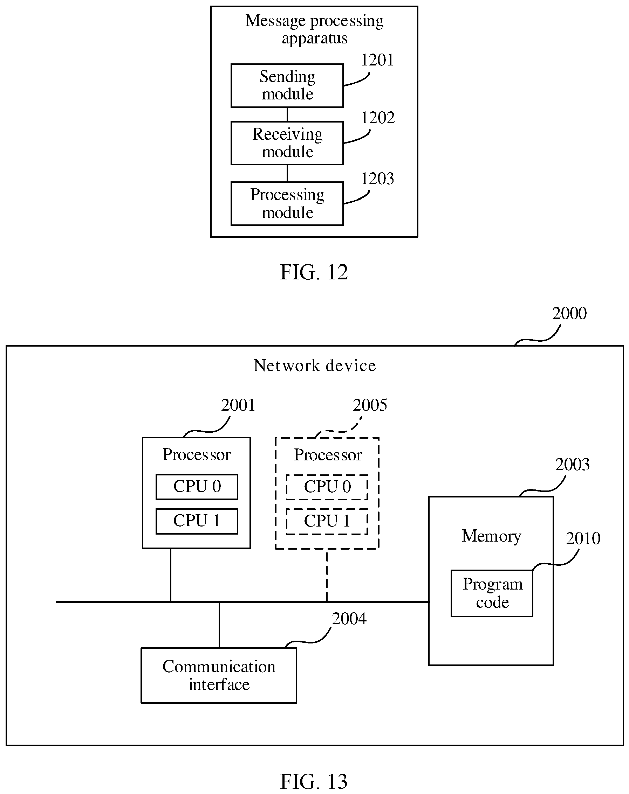

FIG. 12 is a schematic diagram of a structure of a message processing apparatus according to an embodiment of this application. The apparatus is applied to a second network device, and the second network device is the second network device shown in either FIG. 7 or FIG. 10. Based on the following plurality of modules shown in FIG. 12, the message processing apparatus shown in FIG. 12 can perform all or some operations performed by the second network device. It should be understood that the apparatus may include more additional modules than the shown modules or omit some of the shown modules. This is not limited in embodiments of this application. Refer to FIG. 12. The apparatus includes:
a sending module 1201, configured to send a first message to a first port through a second port, where the second port is a port of a second network device, the first port is a port of a first network device, and the first message is used to measure a delay;
a receiving module 1202, configured to receive, through the second port, a second message replied through the first port, where the second message includes a response message and a follow _up message; and
a processing module 1203, configured to stop processing the second message based on a port status of the first port being a non-master state.

In a possible implementation, if a clock identity in the second message is inconsistent with a clock identity of a master node, the port status of the first port is the non-master state.

In a possible implementation, if a source media access control MAC address in the second message is inconsistent with a MAC address of a master node, the port status of the first port is the non-master state.

In a possible implementation, if a source internet protocol IP address in the second message is inconsistent with an IP address of a master node, the port status of the first port is the non-master state.

In a possible implementation, if the second message carries the port status of the first port, and the port status of the first port that is carried in the second message is a listening state, a pre_master state, an uncalibrated state, a passive state, or a slave state, the port status of the first port is the non-master state.

In a possible implementation, the processing module is configured to stop processing the second message based on the port status of the first port being the non-master state and a second condition.

In a possible implementation, the second condition includes: a port status of the second port is a listening state, a pre_master state, an uncalibrated state, a passive state, or a slave state.

In a possible implementation, the first message carries the port status of the second port.

It should be understood that, when the apparatus provided in FIG. 11 or FIG. 12 implements functions of the apparatus, division into the foregoing functional modules is merely used as an example for description. In actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments pertain to a same concept. For a specific implementation process of the apparatuses, refer to the method embodiments. Details are not described herein again.

Refer to FIG. 13. FIG. 13 is a schematic diagram of a structure of a network device 2000 according to an example embodiment of this application. The network device 2000 shown in FIG. 13 is configured to perform the operations related to the message processing method shown in FIG. 7 or FIG. 10. The network device 2000 is, for example, a switch or a router, and the network device 2000 may be implemented by using a general bus architecture.

As shown in FIG. 13, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor can implement or execute various logical blocks, modules, and circuits described with reference to content disclosed in embodiments of the present invention. Alternatively, the processor may be a combination of processors implementing a computing function, for example, a combination of one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one bold line is used to represent the bus in FIG. 13, but this does not mean that there is only one bus or only one type of bus.

The memory 2003 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 2003 exists independently, and is connected to the processor 2001 by using the bus. Alternatively, the memory 2003 may be integrated with the processor 2001.

The communication interface 2004 is any apparatus such as a transceiver, to communicate with another device or a communication network. The communication network may be the Ethernet, a radio access network (RAN), a wireless local area network (wireless local area network, WLAN), or the like. The communication interface 2004 may include a wired communication interface, and may alternatively include a wireless communication interface. Specifically, the communication interface 2004 may be an Ethernet (Ethernet) interface, a Fast Ethernet (Fast Ethernet, FE) interface, a Gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 2000 may include a plurality of processors, for example, a processor 2001 and a processor 2005 shown in FIG. 13. Each of the processors may be a single-core processor (single-CPU) or may be a multi-core processor (multi-CPU). The processor herein may refer to one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 2001, and may receive an input by a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the network device 2000 can implement, by using the processor 2001 and the program code 2010 in the memory 2003, the message processing method provided in the method embodiments. The program code 2010 may include one or more software modules. Optionally, the processor 2001 may also store program code or instructions for executing the solutions of this application.

In a specific embodiment, the network device 2000 in this embodiment of this application may correspond to the first network device in the foregoing method embodiments. The processor 2001 in the network device 2000 reads the instructions in the memory 2003, so that the network device 2000 shown in FIG. 13 can perform all or some operations performed by the first network device.

In a specific embodiment, the network device 2000 in this embodiment of this application may correspond to the second network device in the foregoing method embodiments. The processor 2001 in the network device 2000 reads the instructions in the memory 2003, so that the network device 2000 shown in FIG. 13 can perform all or some operations performed by the second network device.

The network device 2000 may further correspond to the apparatus shown in FIG. 11 and FIG. 12. Each functional module in the apparatus shown in FIG. 11 and FIG. 12 is implemented by using software of the network device 2000. In other words, the functional modules included in the apparatus shown in FIG. 11 and FIG. 12 are generated after the processor 2001 of the network device 2000 reads the program code 2010 stored in the memory 2003.

The steps of the message processing methods shown in FIG. 7 and FIG. 10 are completed by using a hardware integrated logic circuit or instructions in the form of software in the processor of the network device 2000. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

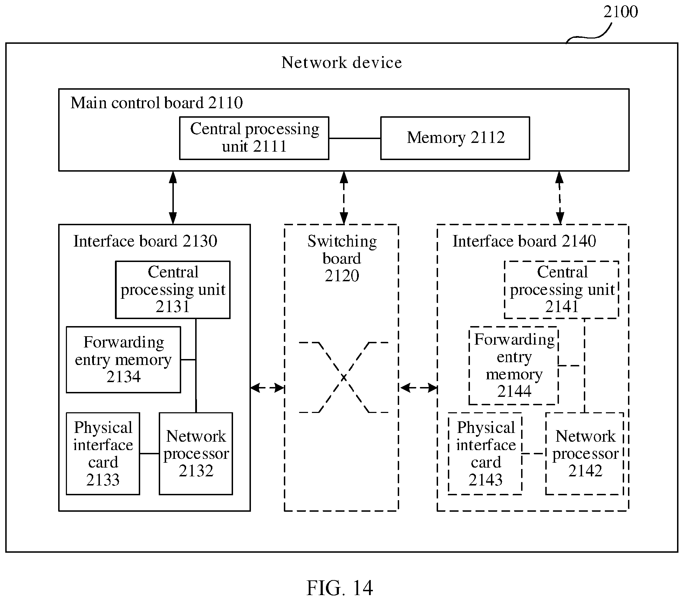

Refer to FIG. 14. FIG. 14 is a schematic diagram of a structure of a network device 2100 according to another example embodiment of this application. The network device 2100 shown in FIG. 14 is configured to perform all or some of the operations in the message processing methods shown in FIG. 7 and FIG. 10. The network device 2100 is, for example, a switch or a router, and the network device 2100 may be implemented by using a general bus architecture.

As shown in FIG. 14, the network device 2100 includes a main control board 2110 and an interface board 2130.

The main control board is also referred to as a main processing unit (main processing unit, MPU) or a route processor card (route processor card). The main control board 2110 is configured to control and manage components in the network device 2100, including route computation, device management, device maintenance, and protocol-based processing. The main control board 2110 includes a central processing unit 2111 and a memory 2112.

The interface board 2130 is also referred to as a line processing unit (line processing unit, LPU), a line card (line card), or a service board. The interface board 2130 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement message forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received message based on a forwarding table stored in the forwarding entry memory 2134. If a destination address of the message is an address of the network device 2100, the network processor 2132 sends the message to a CPU (for example, the central processing unit 2131) for processing. If a destination address of the message is not an address of the network device 2100, the network processor 2132 searches for, based on the destination address, a next hop and an outbound interface corresponding to the destination address in the forwarding table, and forwards the message to the outbound interface corresponding to the destination address. Processing on an uplink message may include processing at a message ingress interface and forwarding table lookup, and processing on a downlink message may include forwarding table lookup and the like. In some embodiments, the central processing unit may also perform a function of the forwarding chip, for example, implement software forwarding based on a general-purpose CPU, so that the interface board does not need the forwarding chip.

The physical interface card 2133 is configured to implement a physical layer interconnection function. Original traffic enters the interface board 2130 from the physical interface card 2133, and a processed message is sent out from the physical interface card 2133. The physical interface card 2133 is also referred to as a subcard and may be installed on the interface board 2130, and is responsible for converting an optoelectronic signal into a message, performing validity check on the message, and then forwarding the message to the network processor 2132 for processing. In some embodiments, the central processing unit 2131 may alternatively perform a function of the network processor 2132, for example, implement software forwarding based on a general CPU. Therefore, the network processor 2132 is not necessary in the physical interface card 2133.

Optionally, the network device 2100 includes a plurality of interface boards. For example, the network device 2100 further includes an interface board 2140, and the interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device has a plurality of interface boards, the switching board 2120 is configured to complete data exchange between the interface boards. For example, the interface board 2130 and the interface board 2140 may communicate with each other via the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) channel is established between the main control board 2110 and the interface board 2130 and between the main control board 2110 and the interface board 2140, and communication between the main control board 2110 and the interface board 2130 and between the main control board 2110 and the interface board 2140 is performed by using the IPC channel.

Logically, the network device 2100 includes a control plane and a forwarding plane. The control plane includes the main control board 2110 and the central processing unit 2111. The forwarding plane includes components used for forwarding, for example, the forwarding entry memory 2134, the physical interface card 2133, and the network processor 2132. The control plane performs the following functions: a router, generating a forwarding table, processing signaling and a protocol message, configuring and maintaining a network device status, and the like. The control plane delivers the generated forwarding table to the forwarding plane. On the forwarding plane, the network processor 2132 searches the forwarding table delivered by the control plane, and then forwards, based on the table, a message received by the physical interface card 2133. The forwarding table delivered by the control plane may be stored in the forwarding entry memory 2134. In some embodiments, the control plane and the forwarding plane may be totally separated, and are not on a same network device.

It should be noted that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a network device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of network device (for example, a network device such as a low-end switch or a router) has a weak data exchange and processing capability. A specific architecture that is to be used depends on a specific networking deployment scenario. This is not limited herein.

In a specific embodiment, the network device 2100 corresponds to the message processing apparatus applied to the first network device shown in FIG. 11. In some embodiments, the receiving module 1101 in the message processing apparatus shown in FIG. 11 is equivalent to the physical interface card 2133 in the network device 2100. The processing module 1102 in the message processing apparatus shown in FIG. 11 is equivalent to the central processing unit 2111 or the network processor 2132 in the network device 2100.

In some embodiments, the network device 2100 further corresponds to the message processing apparatus applied to the second network device shown in FIG. 12. In some embodiments, the sending module 1201 and the receiving module 1202 in the message processing apparatus shown in FIG. 12 are equivalent to the physical interface card 2133 in the network device 2100. The processing module 1203 in the message processing apparatus shown in FIG. 12 is equivalent to the central processing unit 2111 or the network processor 2132 in the network device 2100.

Based on the network devices shown in FIG. 13 and FIG. 14, an embodiment of this application further provides a communication system. The communication system includes a first network device and a second network device. Optionally, the first network device is the network device 2000 shown in FIG. 13 or the network device 2100 shown in FIG. 14, and the second network device is the network device 2000 shown in FIG. 13 or the network device 2100 shown in FIG. 14.

For methods performed by the first network device and the second network device, refer to related descriptions in the embodiments shown in FIG. 7 and FIG. 10, and details are not described herein again.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machine (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided, storing at least one instruction, where the instruction is loaded and executed by a processor to implement the message processing method according to any one of the foregoing descriptions.

This application provides a computer program. When the computer program is executed by a computer, a processor or the computer is enabled to perform corresponding steps and/or procedures in the foregoing method embodiments.

A chip is provided. The chip includes a processor, configured to: invoke, from a memory, instructions stored in the memory and run the instructions, so that a communication device on which the chip is installed performs the methods in the foregoing aspects.

Another chip is provided. The chip includes an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

A person of ordinary skill in the art may be aware that, with reference to the method steps and the modules described in embodiments disclosed in this specification, implementation can be performed by using software, hardware, firmware, or a combination thereof. To clearly describe the interchangeability between the hardware and the software, the foregoing has usually described steps and composition of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement the embodiments, all or a part of the embodiments may be implemented in a form of a computer program product. The computer program product includes one or more computer program instructions. For example, the method in embodiments of this application may be described in a context of a machine-executable instruction. The machine-executable instruction is, for example, a program module executed in a device included in a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instruction for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of embodiments of this application, the computer program code or related data may be carried by any appropriate carrier, so that a device, an apparatus, or a processor can perform various processing and operations described above. Examples of the carriers include a signal, a computer-readable medium, and the like.

Examples of the signal may include propagating signals in electrical, optical, radio, sound, or other forms, such as carrier waves and infrared signals.

The computer-readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

It may be clearly understood by a person skilled in the art that, for the purpose of convenient and brief description, for a detailed working process of the foregoing system, device, and module, refer to a corresponding process in the foregoing method embodiment. Details are not described herein.

In the several embodiments provided in this application, it should be understood that the disclosed system, device, and method may be implemented in other manners. For example, the described device embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should also be understood that although terms such as "first" and "second" are used in the following description to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" means two or more. For example, a plurality of second messages mean two or more second messages. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the term "if" may be interpreted as a meaning "when" ("when" or "upon"), "in a case of determining", or "in a case of detecting". Similarly, according to the context, the phrase "if it is determined that" or "if (a stated condition or event) is detected" may be interpreted as a meaning of "when it is determined that" or "in a case of determining" or "when (a stated condition or event) is detected" or "in a case of detecting (a stated condition or event)".

It should be understood that determining B based on A does not mean that B is determined based on only A, but B may alternatively be determined based on A and/or other information.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A message processing method, comprising:
receiving, by a first network device through a first port, a first message sent by a second port, wherein the first port is a port of the first network device, the second port is a port of a second network device, and the first message is used to measure a delay; and
stopping, by the first network device, replying with a second message based on a port status of the first port being a non-master state, or replying, by the first network device, with a second message to the second port through the first port, wherein the second message carries the port status of the first port, and the second message comprises a response message and a follow _up message.

2. The method according to claim 1, wherein that a port status of the first port is a non-master state comprises: the port status of the first port is a listening state, a pre_master state, an uncalibrated state, a passive state, or a slave state.

3. The method according to claim 1 or 2, wherein the stopping, by the first network device, replying with a second message based on a port status of the first port being a non-master state comprises:
Stopping, by the first network device, replying with the second message based on the port status of the first port being the non-master state and a first condition.

4. The method according to claim 3, wherein the first condition comprises: a clock identity in the first message is inconsistent with a clock identity of a master node.

5. The method according to claim 3, wherein the first condition comprises: a source media access control MAC address in the first message is inconsistent with a MAC address of a master node.

6. The method according to claim 3, wherein the first condition comprises: a source internet protocol IP address in the first message is inconsistent with an IP address of a master node.

7. The method according to claim 3, wherein the first message carries a port status of the second port, and the first condition comprises: the port status of the second port that is carried in the first message is a listening state, a pre_master state, an uncalibrated state, a passive state, or a slave state.

8. A message processing method, comprising:
sending, by a second network device, a first message to a first port through a second port, wherein the second port is a port of the second network device, the first port is a port of a first network device, and the first message is used to measure a delay;
receiving, by the second network device through the second port, a second message replied through the first port, wherein the second message comprises a response message and a follow _up message; and
stopping, by the second network device, processing the second message based on a port status of the first port being a non-master state.

9. The method according to claim 8, wherein if a clock identity in the second message is inconsistent with a clock identity of a master node, the port status of the first port is the non-master state.

10. The method according to claim 8, wherein if a source media access control MAC address in the second message is inconsistent with a MAC address of a master node, the port status of the first port is the non-master state.

11. The method according to claim 8, wherein if a source internet protocol IP address in the second message is inconsistent with an IP address of a master node, the port status of the first port is the non-master state.

12. The method according to claim 8, wherein if the second message carries the port status of the first port, and the port status of the first port that is carried in the second message is a listening state, a pre _master state, an uncalibrated state, a passive state, or a slave state, the port status of the first port is the non-master state.

13. The method according to any one of claims 8 to 12, wherein the stopping, by the second network device, processing the second message based on a port status of the first port being a non-master state comprises:
stopping, by the second network device, processing the second message based on the port status of the first port being the non-master state and a second condition.

14. The method according to claim 13, wherein the second condition comprises: a port status of the second port is a listening state, a pre_master state, an uncalibrated state, a passive state, or a slave state.

15. The method according to any one of claims 8 to 14, wherein the first message carries the port status of the second port.

16. A message processing apparatus, comprising:
a receiving module, configured to receive, through a first port, a first message sent by a second port, wherein the first port is a port of a first network device, the second port is a port of a second network device, and the first message is used to measure a delay; and
a processing module, configured to: stop replying with a second message based on a port status of the first port being a non-master state, or reply with a second message to the second port through the first port, wherein the second message carries the port status of the first port, and the second message comprises a response message and a follow_up message.

17. The apparatus according to claim 16, wherein that a port status of the first port is a non-master state comprises: the port status of the first port is a listening state, a pre_master state, an uncalibrated state, a passive state, or a slave state.

18. The apparatus according to claim 16 or 17, wherein the processing module is configured to stop replying with the second message based on the port status of the first port being the non-master state and a first condition.

19. The apparatus according to claim 18, wherein the first condition comprises: a clock identity in the first message is inconsistent with a clock identity of a master node.

20. The apparatus according to claim 18, wherein the first condition comprises: a source media access control MAC address in the first message is inconsistent with a MAC address of a master node.

21. The apparatus according to claim 18, wherein the first condition comprises: a source internet protocol IP address in the first message is inconsistent with an IP address of a master node.

22. The apparatus according to claim 18, wherein the first message carries a port status of the second port, and the first condition comprises: the port status of the second port that is carried in the first message is a listening state, a pre _master state, an uncalibrated state, a passive state, or a slave state.

23. A message processing apparatus, comprising:
a sending module, configured to send a first message to a first port through a second port, wherein the second port is a port of a second network device, the first port is a port of a first network device, and the first message is used to measure a delay;
a receiving module, configured to receive, through the second port, a second message replied through the first port, wherein the second message comprises a response message and a follow_up message; and
a processing module, configured to stop processing the second message based on a port status of the first port being a non-master state.

24. The apparatus according to claim 23, wherein if a clock identity in the second message is inconsistent with a clock identity of a master node, the port status of the first port is the non-master state.

25. The apparatus according to claim 23, wherein if a source media access control MAC address in the second message is inconsistent with a MAC address of a master node, the port status of the first port is the non-master state.

26. The apparatus according to claim 23, wherein if a source internet protocol IP address in the second message is inconsistent with an IP address of a master node, the port status of the first port is the non-master state.

27. The apparatus according to claim 23, wherein if the second message carries the port status of the first port, and the port status of the first port that is carried in the second message is a listening state, a pre_master state, an uncalibrated state, a passive state, or a slave state, the port status of the first port is the non-master state.

28. The apparatus according to any one of claims 23 to 27, wherein the processing module is configured to stop processing the second message based on the port status of the first port being the non-master state and a second condition.

29. The apparatus according to claim 28, wherein the second condition comprises: a port status of the second port is a listening state, a pre_master state, an uncalibrated state, a passive state, or a slave state.

30. The apparatus according to any one of claims 23 to 29, wherein the first message carries the port status of the second port.

31. A network device, comprising:
a memory and a processor, wherein the memory stores at least one instruction, and the at least one instruction is loaded and executed by the processor, so that the network device implements the message processing method according to any one of claims 1 to 15.

32. A message processing system, comprising a first network device and a second network device, wherein the first network device is configured to perform the message processing method according to any one of claims 1 to 7, and the second network device is configured to perform the message processing method according to any one of claims 8 to 15.

33. A computer-readable storage medium, storing at least one instruction, wherein the instruction is loaded and executed by a processor to implement the message processing method according to any one of claims 1 to 15.
